Europäisches Patentamt

(19) European Patent Office

Office européen des brevets

(11) Veröffentlichungsnummer: **0 141 364**
**B1**

(12) **EUROPÄISCHE PATENTSCHRIFT**

(45) Veröffentlichungstag der Patentschrift:
25.11.87

(21) Anmeldenummer: **84112737.6**

(22) Anmeldetag: **23.10.84**

(51) Int. Cl.⁴: **B 60 G 3/26,** B 60 G 15/06,
B 60 G 3/20

(54) Unabhängige Radaufhängung für Kraftfahrzeuge.

(30) Priorität: **25.10.83 DE 3338644**

(43) Veröffentlichungstag der Anmeldung:
**15.05.85 Patentblatt 85/20**

(45) Bekanntmachung des Hinweises auf die Patenterteilung:
**25.11.87 Patentblatt 87/48**

(84) Benannte Vertragsstaaten:
**DE FR GB IT SE**

(56) Entgegenhaltungen:
**DE-A-2 249 971**
**DE-A-3 119 777**
**DE-A-3 403 464**
**DE-B-2 645 272**
**DE-C-1 430 586**
**GB-A-2 036 241**

(73) Patentinhaber: **BAYERISCHE MOTOREN WERKE Aktiengesellschaft, Postfach 40 02 40 Petuelring 130 - AJ- 36, D-8000 München 40 (DE)**

(72) Erfinder: **Sautter, Wolfgang, Dipl.- Ing., Riesheimer Strasse 24, D-8032 Gräfelfing (DE)**
Erfinder: **Müller, Rudolf, Ing.- grad., Thomas-Schwarz- Strasse 43, D-8060 Dachau (DE)**

(74) Vertreter: **Dexheimer, Rolf, Bayerische Motoren Werke Aktiengesellschaft Postfach 40 02 40 Petuelring 130 - AJ- 31, D-8000 München 40 (DE)**

EP 0 141 364 B1

## Beschreibung

Die Erfindung bezieht sich auf eine unabhängige Radaufhängung für Kraftfahrzeuge, insbesondere für Hinterräder von Personenkraftwagen nach dem Oberbegriff des Hauptanspruchs.

Eine bekannte Radaufhängung geht aus der DE-OS-31 19 777 hervor. Hier sind die oberen Radführungsglieder durch ein Feder-Dämpferbein gebildet und die unteren Radführungsglieder durch zwei Lenkerarme. Dabei sind die Lenkerarme gelenkig miteinander verbunden. Wirkt am Radaufstandspunkt eine Hochkraft, beispielsweise die normale Radlast, entsteht in der Radaufhängung ein Moment, das das Dämpferbein mit Querkräften belastet. Die Folge ist eine erhöhte Reibung zwischen den gleitenden Teilen des Dämpferbeins, was wiederum eine Beeinträchtigung des Federungskomforts bedeutet.

Bei der DE-PS-14 30 586 werden die Querkräfte durch eine versetzt angeordnete Schraubenfeder kompensiert. Dieser Radaufhängung haftet jedoch ebenso wie der nach der DE-OS-31 19 777 der Nachteil an, daß die Schraubenfeder, die verhältnismäßig viel Platz beansprucht, an einer Stelle vorgesehen ist, an der oftmals Raum für andere Zwecke benötigt wird, wie beispielsweise für den Kofferraum oder für aerodynamische Maßnahmen an der Außenhaut des Fahrzeuges.

Aus der DE-OS-22 49 971 ist eine Radaufhängung bekannt, die diesen Nachteil nicht aufweist. Die Schraubenfeder ist hier vom Dämpferbein getrennt und lagert auf einen Querlenker der Radaufhängung. Jedoch treten auch bei dieser Radaufhäng wiederum die Querkräfte im Federbein auf, wenn die erwähnte Hochkraft am Radaufstandspunkt wirkt.

Aufgabe der Erfindung ist es, eine gattungsgemäße Radaufhängung so weiterzubilden, daß die oberen Radführungsglieder - vor allem wenn diese als Dämpferbein ausgeführt sind - weitgehend von Querkräften befreit sind. Desweiteren soll die Radaufhängung platzsparend bauen.

Die Aufgabe wird erfindungsgemäß gelöst mit den kennzeichnenden Merkmalen des Hauptanspruchs. Vorteilhafte Ausführungen der Erfindung sind in den Unteransprüchen dargestellt.

Durch die Erfindung erhält man einen ideellen Gelenkpunkt zwischen Radträger und Tragarm auf der Wirkungslinie der am Radaufstandspunkt angreifenden Hochkraft. Dadurch, daß die Schwenkachse des radträgerseitigen Drehgelenks durch diese Wirkungslinie geht, erzeugt die Hochkraft kein Moment um die Schwenkachse im Gegensatz zu den Radaufhängungen nach dem Stand der Technik. Die am Radträger angeschlossenen oberen Radführungsglieder blieben dadurch belastungsfrei. Andererseits ruft die Hochkraft eine ihr entgegengerichtete Kraft in der Schraubenfeder hervor. Da die Wirkungslinie dieser Kraft wiederum auf die Verbindungslinie zwischen dem aufbauseitigen Tragarmgelenk und dem Schnittpunkt der Schwenkachse mit der Wirkungslinie der Hochkraft gerichtet ist, erzeugt dieses Kräftepaar ebenfalls kein den Radträger belastendes Moment um diese Verbindungslinie bzw. -achse. Die oberen Radführungsglieder bleiben daher insgesamt belastungsfrei.

Um die gleiche Wirkung zu erzielen, müßte bei herkömmlicher Bauart das Drehgelenk zwischen Radträger und Tragarm bis in die Radmitte hineinverschoben sein. Erst bei dieser Lage könnte die Hochkraft kein Moment in den oberen Radführungsgliedern bewirken. Für eine solche Anordnung des Drehgelenks ist jedoch in aller Regel kein Platz vorhanden, da der Raum von Bremsenteilen usw. beansprucht wird.

In der Praxis wird es nicht immer möglich sein, die Schwenkachse genau mit der Wirkungslinie der Hochkraft schneiden zu lassen. Der Schnittpunkt wird gegenbenfalls in der näheren Umgebung liegen. In diesem Fall entsteht selbstverständlich wieder ein die oberen Führungsglieder belastendes Moment. Bleibt das Moment genügend klein, kann es vernachläßigt werden angesichts des mit der Erfindung ebenfalls erreichten Vorteils, das Drehgelenk an einem von keinen anderen Fahrwerksteilen beanspruchten Platz vorzusehen. Sinngemäß gilt das auch für den Verlauf der Verbindungslinie zwischen Wirkungslinie der Federkraft und dem aufbauseitigen Tragarmgelenk.

Die Höhe des Schnittpunktes der Schwenkachse auf der Wirkungslinie der Hochkraft - in Rückansicht gesehen - ist für die Erfindung unwesentlich. Er hängt in erster Linie von der konstruktiven Ausgestaltung der unteren Radführungsglieder ab.

Die Erfindung bedingt eine Anordnung der Schraubenfeder auf dem Tragarm. Dadurch ergibt sich aber wiederum der Vorteil, daß sie nicht dort Platz verbraucht, wo er für andere Zwecke benötigt wird. Dabei kann die Schraubenfeder auch schräg gestellt sein. Wichtig ist nur, daß ihre Kraftwirkungslinie die genannte Verbindungslinie schneidet.

Die Erfindung eignet sich besonders gut bei solchen Radaufhängungen, bei denen die oberen Radführungsglieder durch ein Dämpferbein dargestellt sind. Das Dämpferbein ist hier frei von Querkräften. Die Losbrechkräfte bleiben dadurch gering, so daß das Dämpferbein bereits auf kleine Fahrbahnstöße reagieren kann.

Die Erfindung ist jedoch auf solche Achsen nicht beschränkt. Sie läßt sich auch dann anwenden, wenn die obere Radführung Lenker, beispielsweise Quer- oder Dreieckslenker übernehmen.

Der Tragarm ist Teil der unteren Radführung. In einer praxisgerechten Ausgestaltung ist der Tragarm als Querlenker ausgebildet, der im wesentlichen hinter der Radachse liegt. Als weiteres unteres Radführungsglied ist eine vor dem Tragarm angeordnete Stützstrebe vorgesehen, die über ein Drehgelenk am Radträger angeschlossen ist und im wesentlichen in Fahrzeuglängsrichtung nach vorne verläuft. Über ein weiteres elastisches Gelenk ist sie dann am Fahrzeugaufbau befestigt.

In einer weiteren Ausführungsform kann die Zugstrebe auch gelenkig mit dem Tragarm verbunden sein. Ebenso kann diese Verbindung starr sein, so daß im eigentlichen Sinne für die untere Radführung ein Dreieckslenker vorliegt. Hier ist allerdings darauf zu achten, daß die Stützstrebe für den Einfederungsvorgang nachgiebig ausgelegt ist. Das kann entweder durch ein entsprechendes aufbauseitiges Gelenk erreicht werden. Eine andere Möglichkeit besteht darin, die Stützstrebe entlang ihrer Längsachse in Hochrichtung biegeelastisch auszulegen.

Die Erfindung ist auf solche Ausführungen der unteren Radführung nicht beschränkt. So könnte auch der Tragarm in Fahrtrichtung gesehen vor der Stützstrebe angeordnet sein. Er muß demnach auch nicht unbedingt quer zur Fahrzeuglängsachse verlaufen.

Desweiteren ist die Erfindung nicht auf die hinteren Fahrzeugräder beschränkt, wenn sie sich auch für diese in besonders vorteilhafter Weise eignet. Ebenso lassen sich die Vorderräder mit der erfindungsgemäßen Radaufhängung versehen. Hier wird allerdings ein größerer konstruktiver Aufwand notwendig sein, da die Lenkbarkeit der Räder weitere Gelenke erfordert.

Ein vorteilhaftes Ausführungsbeispiel der Erfindung wird in der nachfolgenden Beschreibung anhand der dazugehörigen Zeichnung näher erläutert. Die Zeichnung zeigt schematisch in

Fig. 1 die Draufsicht einer erfindungsgemäßen Radaufhängung und

Fig. 2 die Hinteransicht dieser Radaufhängung.

Die in der Zeichnung dargestellte unabhängige Radaufhängung soll für die Hinterräder eines Personenkraftwagens vorgesehen sein. Dabei sind in den Fig. all die Teile weggelassen, die für das Verständnis der Erfindung nicht notwendig sind, so auch eine eventuelle Antriebswelle.

Ein Hinterrad 1 lagert auf einem Radträger 2. Der Radträger 2 ist über obere Radführungsglieder 3 und untere Radführungsglieder 4 am Fahrzeugaufbau oder dgl. angelenkt. Der Fahrzeugaufbau ist selbst nicht dargestellt, jedoch sollen schematisch dargestellte Gelenke 5, 6 den aufbauseitigen Anschluß der unteren Radführungsglieder andeuten.

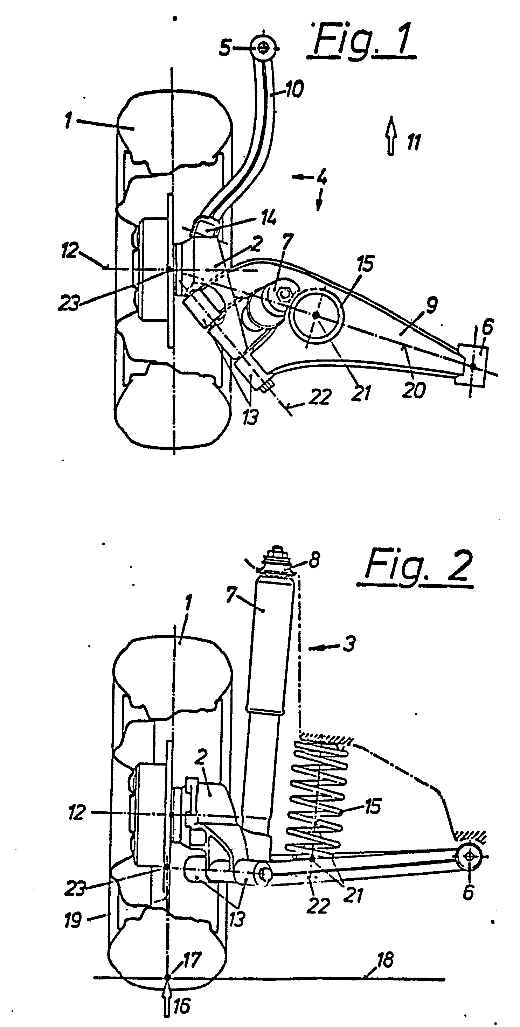

Wie am besten aus Fig. 2 erkennbar ist, werden die oberen Radführungsglieder 3 durch ein Dämpferbein 7 gebildet, das im wesentlichen vertikal ausgerichtet ist und über ein Drehgelenk mit dem Radträger 2 verbunden ist. Mit dem anderen Ende stützt sich das Dämpferbein 7 über ein weiteres Gelenk 8 am wiederum nicht dargestellten Fahrzeugaufbau ab.

Nach Fig. 1 sind die unteren Radführungsglieder gebildet aus einem im wesentlichen quer zur Fahrzeuglängsachse angeordneten Tragarm 9 und einer annähernd in Fahrzeuglängsrichtung verlaufenden Stützstrebe 10. Dabei ist die Stützstrebe 10 in Fahrtrichtung gesehen, die durch den Pfeil 11 dargestellt sein soll, vor dem Tragarm 9 angeordnet, während dieser wiederum im wesentlichen hinter der mit 12 dargestellten Radachse liegt. Der Tragarm 9 und die Stützstrebe 10 sind jeweils über ein Drehgelenk 13, 14 schwenkbar am Radträger 2 angeschlossen, während sie mit ihren anderen Enden über die bereits erwähnten Gelenke 5 und 6 mit dem Fahrzeugaufbau verbunden sind. Außerdem sitzt auf dem Tragarm 9 eine Schraubenfeder 15, die sich am Fahrzeugaufbau abstützt.

In Fig. 2 greift eine Hochkraft 16 am Radaufstandspunkt 17 an. Diese Hochkraft 16 ist durch das Gewicht des Fahrzeuges gegeben und kann sich durch Ünebenheiten der Fahrbahn 18 erhöhen oder verringern. Die Wirkungslinie der Hochkraft 16 ist mit 19 bezeichnet. Sie verläuft senkrecht nach oben.

In Fig. 1 ist eine Verbindungslinie 20 erkennbar zwischen dem Gelenkmittelpunkt des aufbauseitigen Tragarmgelenks 6 und der Wirkungslinie der Federkraft, hier mit 21 bezeichnet. Die gedachte Verlängerung dieser Verbindungslinie 20 schneidet die Schwenkachse 22 des radträgerseitigen Drehgelenks 13 des Tragarms 9 in einem Punkt 23, der auf der Wirkungslinie 19 der Hochkraft 16 liegt.

Es sei noch erwähnt, daß das Hinterrad 1 in der Zeichnung so dargestellt ist, daß die Wirkungslinie 19 mit der Radmittenebene nahezu zusammenfällt. Es ist leicht einzusehen, daß je nach Radsturz die Abweichungen von der Radmittenebene variieren können.

## Patentansprüche

1. Unabhängige Radaufhängung für Kraftfahrzeuge, insbesondere für Hinterräder von Personenkraftwagen, mit einem das Rad tragenden Radträger (2), der über obere (3) und untere (9, 10) Radführungsglieder am Fahrzeugaufbau oder dgl. angelenkt und dort über eine an einem der Radführungsglieder vorgesehene Schraubenfeder (15) abgestützt ist, wobei die unteren Radführungsglieder einen am Fahrzeugaufbau angelenkten Tragarm (9) aufweisen, der über ein Drehgelenk (13) schwenkbar am Radträger angeordnet ist, gekennzeichnet durch folgende Merkmale:

- Der Tragarm (9) nimmt in an sich bekannter Weise die Schraubenfeder (15) auf;
- die zwischen Radträger (2) und Tragarm (9) gebildete - Schwenkachse (22) schneidet in ihrer Verlängerung die Wirkungslinie (19) einer am Radaufstandspunkt (17) wirkenden Hochkraft (16) in einem Schnittpunkt (23);
- die Verbindungslinie (20) zwischen dem Schnittpunkt (23) und der Gelenkmitte des aufbauseitigen Tragarmgelenks (6) schneidet sich mit der Kraftwirkungslinie (21) der Schraubenfeder (15).

2. Unabhängige Radaufhängung nach Anspruch 1, dadurch gekennzeichnet, daß die unteren Radführungsglieder (4) gebildet sind aus einem als Querlenker ausgelegten Tragarm (9) und einer davor angeordneten, annähernd in Fahrzeuglängsrichtung verlaufenden Stützstrebe (10).

3. Unabhängige Radaufhängung nach Anspruch 2, dadurch gekennzeichnet, daß die Stützstrebe (10) mit dem Tragarm (9) verbunden ist.

4. Unabhängige Radaufhängung nach Anspruch 3, dadurch gekennzeichnet, daß die Stützstrebe (10) gelenkig am Tragarm (9) gelagert ist.

5. Unabhängige Radaufhängung nach Anspruch 2, dadurch gekennzeichnet, daß die Stützstrebe (10) gelenkig mit dem Radträger (2) verbunden ist.

6. Unabhängige Raudaufhängung nach einem oder mehreren der Ansprüche 1 bis 5, dadurch gekennzeichnet, daß die oberen Radführungsglieder (3) durch ein Dämpferbein (7) gebildet sind.

## Claims

1. An independent wheel suspension for motor vehicles, especially for the rear wheels of passenger cars, having a wheel carrier (2) carrying the wheel which is articulated through upper (3) and lower (9, 10) wheel guide members to the vehicle bodywork or the like and is supported there by means of a helical spring (15) provided on one of the wheel guide members, while the lower wheel guide members comprise a carrier arm (9) articulated to the vehicle bodywork, which arm is pivotably arranged on the wheel carrier by means of a swivel joint (13), characterised by the following features:
- the carrier arm (9) receives the helical spring (15) in a manner known per se;
- the extension of the pivot axis (22) formed between the wheel carrier (2) and the carrier arm (9) intersects, at an intersection point (23), the line of action (19) of an upward force (16) acting at the standing point (17) of the wheel:
- the line (20) of connection between the intersection point (23) and the joint centre of the carrier arm joint (6) to the bodywork intersects the line (21) of force action of the helical spring (15).

2. An independent wheel suspension according to Claim 1, characterised in that the lower wheel guide members (4) are formed as a carrier arm (9) designed as a transverse link and as a support strut (10) arranged ahead of it and extending approximately in the longitudinal direction of the vehicle.

3. An independent wheel suspension according to Claim 2, characterised in that the support strut (10) is connected to the carrier arm (9).

4. An independent wheel suspension according to Claim 3, characterised in that the support strut (10) is articulatedly mounted on the carrier arm (9).

5. An independent wheel suspension according to Claim 2, characterised in that the support strut (10) is articulatedly connected to the wheel carrier (2).

6. An independent wheel suspension according to one or more of Claims 1 to 5, characterised in that the upper wheel guide members (3) are formed by a shock-absorbing leg (7).

## Revendications

1. Suspension indépendante de la roue pour véhicules automobiles, notamment pour roues arrière de voitures particulières, comportant un support de roue (2) portant la roue et qui est articulé sur la carrosserie, ou autre partie du vehicule, par l'intermédiaire d'organes supérieurs (3) et inférieurs (9, 10) de guidage de la roue et s'appuie là par l'intermédiaire d'un ressort hélicoïdal (15) prévu sur l'un des organes de guidage de la roue, les organes inférieurs de guidage de la roue comportant un avant-bras porteur (9) articulé sur la carrosserie du véhicule et qui est monté sur le support de roue, de façon à pouvoir pivoter, par l'intermédiaire d'une charnière (13), suspension caractérisée par les caractéristiques suivantes:
- l'avant-bras porteur (9) sert à y fixer de manière connue en soi le ressort hélicoïdal (15);
- l'axe de pivotement (22) formé entre le support de roue (2) et l'avant-bras porteur (9) coupe dans son prolongement, en un point d'intersection (23), la ligne d'action (19) d'une force de réaction (16) agissant sur le point de contact au sol (17) de la roue;
- la ligne de liaison (20) entre le point d'intersection (23) et le centre de l'articulation (6) côté carrosserie de l'avant-bras porteur coupe la ligne d'action de force (21) du ressort hélicoïdal (15).

2. Suspension indépendante de roue selon la revendication 1, caractérisée en ce que les organes inférieurs (4) de guidage de la roue sont formés par un avant-bras porteur (9) réalisé sous forme d'élément de suspension transversal et par une traverse d'appui (10) montée en avant de celui-ci et s'étendant approximativement dans la direction longitudinale du véhicule.

3. Suspension indépendante de roue selon la revendication 2, caractérisée en ce que la traverse d'appui (10) est reliée à l'avant-bras porteur (9).

4. Suspension indépendante de roue selon la revendication 3, caractérisée en ce que la traverse d'appui (10) est montée articulée sur l'avant-bras porteur (9).

5. Suspension indépendante de roue selon la revendication 2, caractérisée en ce que la traverse d'appui (10) est reliée par articulation au support de roue (2).

6. Suspension indépendante de roue selon l'une ou plusieurs des revendications 1 à 5, caractérisée en ce que les organes supérieurs (3) de guidage de la roue sont formés par un bras d'amortisseur (7).

0 141 364

_Fig. 1_

_Fig. 2_